# EUROPEAN PATENT SPECIFICATION

(11) **EP 2 048 392 B1**
(45) Date of publication and mention of the grant of the patent: **10.04.2013**
(21) Application number: 08017637.3
(22) Date of filing: 08.10.2008
(51) Int. Cl.: F16C 33/20

(54) **Sliding bearing**
Gleitlager
Palier à contact de glissement

(30) Priority: 10.10.2007 JP 2007264325
(43) Date of publication of application: 15.04.2009
(73) Proprietor: Daido Metal Company Ltd., Nagoya (JP)
(72) Inventor: Naka, Isei, Inuyama-shi Aichi (JP); Kawakami, Naohisa, Inuyama-shi Aichi (JP); Nakasone, Takeyuki, Inuyama-shi Aichi (JP); Tanaka, Takuya, Inuyama-shi Aichi (JP)
(74) Representative: Beckmann, Claus

(56) References cited:
- US-A- 3 969 124
- US-A- 5 024 882
- US-A1- 2004 115 477

## Description

### Background of the invention

### (1) Field of the invention

The present invention relates to a sliding bearing or a plain bearing having a resin layer coated on the surface of a bearing alloy.

### (2) Description of related art

Conventionally, in internal combustion engines, electric corrosion occurs between different kinds of metals due to leakage currents from ignition systems and electrical devices. The electric corrosion is the following phenomenon: when currents flow at a portion where different kinds of metals are in contact, potential difference is generated between the different kinds of metals and the metals suffers from electric corrosion due to the potential difference. As a countermeasure, JP-A-7-309290 (see paragraph [0005]), for example, proposes that electrical components used in an engine are grounded to the main part of the body to prevent electric corrosion due to leakage currents from the electrical components. In addition, in the rolling bearing for internal combustion engines, as shown in JP-A-9-72332 (see paragraphs [0006] and [0008]), for example, the surface of at least one of the bearing (rolling bearing) and the connecting rod supporting member (shaft) is coated with an insulating resin layer to prevent electric corrosion of the bearing and improve durability thereof.

### Summary of the Invention

Even in an internal combustion engine insulated by a ground as in JP-A-7-309290 described above, however, leakage currents from the ignition system and the electrical devices cannot be completely blocked. In JP-A-9-72332 described above, the resin layer insulates between the shaft and the rolling bearing to improve resistance of the rolling bearing to electric corrosion. However, if an insulating resin layer is provided in a sliding bearing using lubricating oil, following defects have been known: while resistance of the sliding bearing to electric corrosion is improved, damage of resin due to electrical discharge occurs between the shaft and the sliding bearing around a location where the oil film thickness is thinnest. This damage of resin due to electrical discharge is caused by leakage currents from the ignition system and electrical devices, as well as by the resin layer being charged with static electricity by friction between the shaft and the sliding bearing.

Specifically, unlike a rolling bearing having its shaft in constant contact such as in JP-A-9-72332, a sliding bearing for internal combustion engines has a tendency that a pressure of a lubricating oil film prevents the shaft from being in contact with the resin layer, so that electrical discharge from the charged resin layer to the shaft side does not readily occur, and the electrical charge of the resin layer tends to be large. Thus, electrical discharge from the charged resin layer to the shaft side suddenly occurs at a moment when the shaft comes in contact with the resin layer such as when the lubricating oil film breaks or viscosity of the lubricating oil decreases due to a high temperature of the sliding bearing. It is considered that the temperature of the resin layer becomes locally high due to this electrical discharge and the resin layer suffers damage.

Document US 2004/0115477 (B. Nesbitt) mentions the problem of static electricity in combination with the use of carbon particles without stipulation of the solution disclosed by the present invention.

The invention has been made in view of the above-described circumstances, and its object is to provide a sliding bearing having excellent resistance to electric corrosion as well as having electrical discharge function.

To achieve the above-described object, the invention provides a sliding bearing having a resin layer coated on a surface of a bearing alloy layer. Carbon particles having an average particle diameter of 15 to 45% of the thickness of the resin layer are added into the resin layer in an amount of 10 to 40% by volume (claim 1).

Preferably, a resin of the resin layer is polyamide-imide resin, polybenzimidazole resin or polyimide resin (claim 2).

Preferably, molybdenum disulfide and/or tungsten disulfide is further added to the resin layer in an amount of 20 to 45% by volume.

According to the invention, the resin layer coated on the surface of the bearing alloy is electrically insulating, so that current does not flow between the shaft and the bearing alloy and the bearing alloy obtains good resistance to electric corrosion. In addition, the carbon particles have good electrical conductivity as well as metal, among non-metallic substances. When such an electrically conductive carbon particle amount is appropriately added into an insulating resin layer, the resin layer can generate minute electrical discharge between the shaft and the carbon particles while maintaining the insulating properties. That is, by dispersion of the electrical discharge phenomenon over the whole surface of the resin layer, electrical discharge from the carbon particle can occur before the electrical charge of the resin layer becomes large, thereby preventing a locally high temperature of the resin layer. In addition, since the carbon particle has a high melting point, it does not suffer damage even if the temperature becomes high due to electrical discharge. Considering the sliding properties of the sliding bearing, natural graphite or artificial graphite having excellent sliding properties is preferably used as the carbon particles.

In addition, the amount of the carbon particles added to the resin layer is preferably 10 to 40% by volume. If the amount of the carbon particles added is less than 10% by volume, dispersion of the carbon particles in the resin is insufficient, and sudden electrical discharge from the resin layer to the shaft side will occur, causing the resin layer to be high in temperature and suffer damage. On the other hand, if the amount of added carbon particles exceeds 40% by volume, the carbon particles in the resin layer contact with each other frequently so that the resin layer has electrical conductivity. Consequently, electric corrosion of the bearing alloy will progress.

The average particle diameter of the carbon particle is preferably 15 to 45% of the thickness of the resin layer in order to maintain the insulating properties of the resin layer. If the average particle diameter of the carbon particle is less than 15% of the film thickness of the resin layer, there will be a large number of fine carbon particles in the resin layer so that the carbon particles will be in contact and form a current flow path, and thus the resin layer will have electrical conductivity. Thus, electric corrosion will possibly occur in the bearing alloy. On the other hand, if the average particle diameter of the carbon particle exceeds 45% of the film thickness of the resin layer, the specific surface area of the carbon particle is reduced. Although the probability of contact between the carbon particles is low, an electrical passage will be formed at a portion where large carbon particles are brought into contact so that the resin layer has electrical conductivity and electric corrosion will possibly occur in the bearing alloy.

The film thickness of the resin layer is preferably not less than 10 µm so that it may not readily be lost due to abrasion with the shaft, and is preferably not more than 50 µm so that the affect of change in the bearing clearance due to the difference of the coefficient of thermal expansion thereof from that of the bearing alloy or the shaft may be small.

In addition, as defined in claim 2, the resin of the resin layer is preferably polyamide-imide resin (hereinafter referred to as "PAI resin"), polybenzimidazole resin (hereinafter referred to as "PBI resin") or polyimide resin (hereinafter referred to as "PI resin"). These resins have excellent heat resistance and are suitable for the resin layer of the sliding bearing.

In addition, since molybdenum disulfide and tungsten disulfide are insulating substances, adding only molybdenum disulfide and/or tungsten disulfide to the resin layer would not contribute to dispersion of electrical discharge from the whole surface of the resin layer. However, when molybdenum disulfide and/or tungsten disulfide are added to the resin layer in addition to the carbon particle, the molybdenum disulfide and/or tungsten disulfide, which are insulating, exist between the carbon particles. That is, the degree of dispersion of the carbon particles in the resin layer increases so that dispersion of electrical discharge from the whole surface of the resin layer can be improved. In addition, existence of insulating molybdenum disulfide and/or tungsten disulfide between the carbon particles can prevent formation of an electrical passage by contact between the carbon particles and maintain the resistance of the resin layer to electric corrosion.

In addition, the amount of molybdenum disulfide and/or tungsten disulfide added to the resin layer is preferably 20 to 45% by volume. With such an amount of addition, the amount of abrasion of the resin layer can be reduced and the resistance of the resin layer to electric corrosion can be sustained for a long period of time. If the amount of molybdenum disulfide and/or tungsten disulfide added is less than 20% by volume, the degree of dispersion of the carbon particles in the resin layer may not be improved, and electrical discharge from the whole surface of the resin layer is not sufficiently dispersed. Thus reduction of the amount of abrasion of the resin layer will not be achieved. On the other hand, if the amount of molybdenum disulfide and/or tungsten disulfide added exceeds 45% by volume, the strength of the resin layer is too little and the resin layer is liable to be abraded.

Molybdenum disulfide and tungsten disulfide are known as solid lubricant. Since the sliding properties of the resin layer are improved, the electrical charge of the resin layer decreases so that the frequency of occurrence of electrical discharge can be reduced. In addition, considering the strength of the resin layer, the total amounts of molybdenum disulfide and/or tungsten disulfide and the carbon particles added to the resin layer is preferably not more than 60% by volume. In addition, a hard particle composed of an insulating substance, not limited to molybdenum disulfide and/or tungsten disulfide, may be added to the resin layer in order to improve the resistance of the resin layer to abrasion.

### Brief Description of Drawings

Fig. 1 is a sectional view of a sliding bearing of an embodiment according to the invention; and
Fig. 2 is a schematic view of a thrust tester used in a friction abrasion test.

### Detailed Description of the Invention

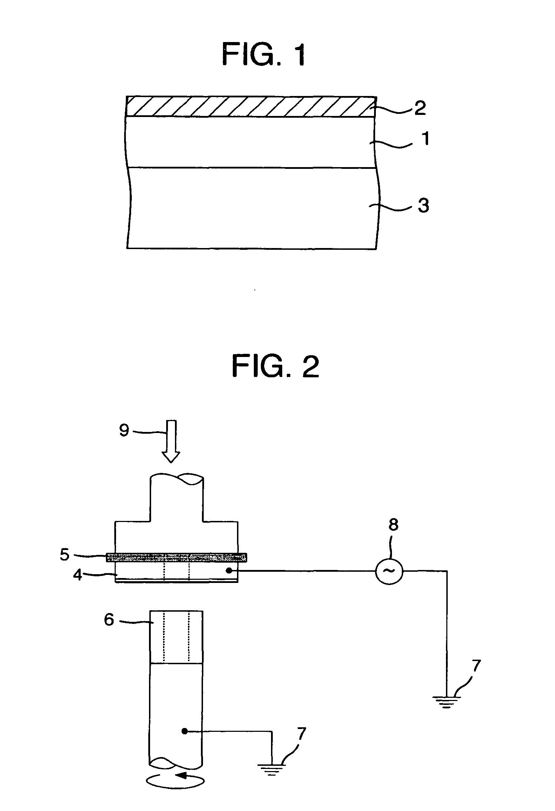

Embodiments of the present invention will be described below. Fig. 1 is a schematic sectional view of a sliding bearing according to an embodiment of the invention. The sliding bearing is configured such that a resin layer 2 is provided on the surface of a bearing alloy layer 1 of a copper-based alloy, an aluminum-based alloy or the like bonded to the surface of a back metal 3. In the embodiment, the resin layer 2 includes heat-resistant resin, as its major constituent, such as PAI, PBI or PI resin, and containing 10 to 40%, by volume, of a carbon particles (Gr) such as natural graphite, artificial graphite, which has an average particle diameter of 15 to 45% of the thickness of the resin layer. Further, the resin layer 2 may contain 20 to 45%, by volume, of molybdenum disulfide (MoS₂) and/or tungsten disulfide (WS₂) as needed. The average diameter of the carbon particle was measured by means of the laser diffraction scattering method.

Next, a friction abrasion test and an electrical conductivity test were conducted for examples having a resin layer according to the invention and comparative examples having a resin layer. With respect to the examples and the comparative examples of the friction abrasion test, a flat plate having an aluminum-based bearing alloy layer bonded to a steel plate as the back metal was prepared and was subjected to degreasing processing. Subsequently, the surface of the bearing alloy layer was roughened by blasting processing. Further, after washing and drying, each composition shown in Examples Nos. 1 to 9 and Comparative examples Nos. 11 to 17 in Table 1 was diluted with an organic solvent (N-methyl-2-pyrrolidone) and were applied on the surface of the above-described bearing alloy layer by spraying with an air spray. Thereafter, it was baked at 180°C for 60 minutes after the organic solvent was removed by drying. The thickness of the resin layer was adjusted to be 20 µm.

With respect to the examples of the electrical conductivity test, each composition shown in Examples Nos. 1 to 9 and Comparative examples Nos. 11 to 17 was diluted with an organic solvent (N-methyl-2-pyrrolidone) and applied layer by spraying with an air spray on an alumina plate. Thereafter, the organic solvent was removed by drying and examples were baked at 180°C for 60 minutes, and thereafter the resin layer was peeled from the alumina plate. The thickness of the resin layer was 20 µm.

The friction abrasion test was conducted under the conditions shown in Table 2 with respect to Examples Nos. 1 to 9 and Comparative examples Nos. 11 to 17 using the thrust tester shown in Fig. 2. They were evaluated by an amount of abrasion, and electrical discharge damage which was visually observed with the presence or absence of melting damage portions on the surface of the resin layer. In the electrical conductivity test, a positive electrode was contacted on the resin layers of Examples Nos. 1 to 9 and Comparative examples Nos. 11 to 17 on their front side and a negative electrode was contacted on their back side. A direct current of 0.5 mA was passed to confirm the presence or absence of electrical conductivity of the resin layer. In Fig. 2, reference number 4 denotes a test piece; 5 denotes a insulator; 6 denotes a shaft; 7 denotes an ground earth; 8 denotes an AC power supply; and 9 denotes a load. The results are shown in Table 1.

**[Table 1]**

| Example | | | | | | | | | | | |
|---|---|---|---|---|---|---|---|---|---|---|---|
| No | Composition (vol%) | | | | | | Average diameter of carbon particle (µm) | Average diameter of carbon particle/ Resin layer thickness (%) | Amount of Abrasion (µm) | Presence or absence of electrical discharge damage | Electrical conductivity |
| | PAI | PBI | PI | Gr | MoS2 | WS2 | | | | | |
| 1 | balance | - | - | 10 | - | - | 5 | 25 | 12 | Absent | Absent |
| 2 | balance | - | - | 25 | - | - | 5 | 25 | 10 | Absent | Absent |
| 3 | balance | - | - | 40 | - | - | 5 | 25 | 12 | Absent | Absent |
| 4 | balance | - | - | 40 | - | - | 3 | 15 | 13 | Absent | Absent |
| 5 | balance | - | - | 40 | - | - | 9 | 45 | 14 | Absent | Absent |
| 6 | balance | - | - | 25 | 20 | - | 5 | 25 | 6 | Absent | Absent |
| 7 | balance | - | - | 15 | 30 | - | 5 | 25 | 5 | Absent | Absent |
| 8 | - | balance | - | 25 | - | 30 | 5 | 25 | 4 | Absent | Absent |
| 9 | - | - | balance | 15 | 25 | 20 | 5 | 25 | 6 | Absent | Absent |

| Comparative example | | | | | | | | | | | |
|---|---|---|---|---|---|---|---|---|---|---|---|
| 11 | balance | - | - | - | - | - | - | - | Melting damage present | Present | Absent |
| 12 | balance | - | - | - | 30 | - | - | - | Melting damage present | Present | Absent |
| 13 | balance | - | - | - | - | 30 | - | - | Melting damage present | Present | Absent |
| 14 | balance | - | - | 7 | - | - | 5 | 25 | Melting damage present | Present | Absent |
| 15 | balance | - | - | 45 | - | - | 5 | 25 | 15 | Absent | Present |
| 16 | balance | - | - | 40 | - | - | 2 | 10 | 16 | Absent | Present |
| 17 | balance | - | - | 40 | - | - | 12 | 60 | 15 | Absent | Present |

**[Table 2]**

| Friction abrasion test | |
|---|---|
| Item | Test condition |
| Tester | Thrust tester |
| Test piece | Flat plate test piece having an outer diameter of 27.2 mm and inner diameter of 22 mm |
| Counterpart shaft | S55C quenched |
| Load | 9MPa |
| Sliding speed | 1 m/sec |
| Lubrication | In oil |
| Lubricating oil | SAE#30 |
| Test time | 30 min |
| Alternating current | 10V |

Compositions of the resin layer in Table 1 are represented by volume percentage (vol %). First, in Comparative example No. 11 in which no carbon particle is added to the resin layer, while the resin layer does not have electrical conductivity, melting damage of resin due to electrical discharge occurs. On the other hand, in Examples Nos. 1 to 5 in which electrically conductive carbon particles are added to the resin layer, melting damage of resin due to electrical discharge does not occur while the insulating properties of the resin layer are maintained. This is because when the electrically conductive carbon particle is added to the resin layer, the electrical discharge phenomenon is dispersed over the whole surface of the resin layer and minute electrical discharge is generated from the carbon particle before the electrical charge of the resin layer becomes large, so that the temperature of the resin layer is restrained from becoming locally high. In addition, since the insulating properties of the resin layer are maintained even if an electrically conductive carbon particle is added to the resin layer, the resistance of the resin layer to electric corrosion can also be said to be excellent.

In addition, comparing Example No. 1 (10% by volume) and Comparative example No. 14 (7% by volume) having different amounts of carbon particles, although both resin layers do not have electrical conductivity, melting damage of resin due to electrical discharge does not occur in Example No. 1 while melting damage of resin due to electrical discharge occurs in Comparative example No. 14. This is because when the amount of the added carbon particles is less than 10% by volume such as in Comparative example No. 14, the amount of the carbon particles added in the resin layer is small, dispersion of electrical discharge over the whole surface of the resin layer is insufficient and as a result melting damage of resin due to electrical discharge occurs.

Comparing Example No. 3 (40% by volume) and Comparative example No. 15 (45% by volume) having different amounts of carbon particles, melting damage of resin due to electrical discharge does not occur and the resin layer does not have electrical conductivity in Example No. 3, while melting damage of resin due to electrical discharge occurs and the resin layer has electrical conductivity in Comparative example No. 15. This is because when the added amount of the carbon particles exceeds 40% by volume such as in Comparative example No. 15, the amount of the carbon particles added in the resin layer is large, and the frequency of contact between the carbon particles is high, so that the resin layer has electrical conductivity, and electric corrosion occurs in the bearing alloy.

Comparing Example No. 4 (15%) and Comparative example No. 16 (10%) having different average particle diameters of the carbon particles with respect to the thickness of the resin layer, melting damage of resin due to electrical discharge does not occur and the resin layer does not have electrical conductivity in Example No. 4, while melting damage of resin due to electrical discharge occurs and the resin layer has electrical conductivity in Comparative example No. 16. This is because, when the average particle diameter of the carbon particle with respect to the thickness of the resin layer is less than 15% such as in Comparative example No. 16, the number of fine carbon particles in the resin layer is large, and an electrical passage is formed by contact between the carbon particles so that the resin layer has electrical conductivity, and electric corrosion occurs in the bearing alloy.

Comparing Example No. 5 (45%) and Comparative example No. 17 (60%) having different average particle diameters of the carbon particles with respect to the thickness of the resin layer, melting damage of resin due to electrical discharge does not occur and the resin layer does not have electrical conductivity in Example No. 5, while in Comparative example No. 17, melting damage of resin due to electrical discharge occurs and the resin layer has electrical conductivity. This is because, when the average particle diameter of the carbon particle with respect to the thickness of the resin layer exceeds 45% such as in Comparative example No. 17, although the probability of contact between the carbon particles in the resin layer is low, an electrical passage is formed by the portion where large carbon particles are in contact, so that the resin layer has electrical conductivity, and electric corrosion occurs in the bearing alloy.

In addition, in Examples Nos. 6 to 9 in which molybdenum disulfide and/or tungsten disulfide is added to the resin layer in addition to the carbon particles, the amount of abrasion of the resin layer is generally reduced by half, as compared with Examples 1 to 5 in which molybdenum disulfide and/or tungsten disulfide is not added. Melting damage of resin due to electrical discharge does not occur while insulating properties of the resin layer are maintained in Examples Nos. 6 to 9 as well. This is because the insulating molybdenum disulfide and/or tungsten disulfide exists between the carbon particles and the degree of dispersion of the carbon particles in the resin layer is high so that dispersion of electrical discharge from the whole surface of the resin layer is improved. That is, it can be said that consequently abrasion of resin due to electrical discharge hardly occurs. Molybdenum disulfide and tungsten disulfide also serve as solid lubricant. Since the sliding properties of the resin layer are improved, the electrical charge of the resin layer decreases so that the frequency of occurrence of electrical discharge can be reduced as well.

Although not shown in comparative examples, when the amount of added molybdenum disulfide was less than 20% by volume, the degree of dispersion of the carbon particles in the resin layer could not be improved so that electrical discharge from the whole surface of the resin layer was not sufficiently dispersed and reduction of the amount of abrasion of the resin layer was not achieved. On the other hand, when the amount of molybdenum disulfide added exceeded 45% by volume, the strength of the resin layer was too little and the result was that the resin layer was liable to be abraded.

Examples Nos. 6 to 9 have different kinds of resins: the resin layer in Examples Nos. 6 and 7 is composed of PAI resin; that in Example No. 8 is of PBI resin; and that in Example No. 9 is of PI resin. According to the test result, any of the resins has excellent heat resistance. Even with a resin layer composed of PBI resin or PI resin, melting damage of resin due to electrical discharge did not occur while the insulating properties of the resin layer were maintained.

In addition, in Examples Nos. 6 to 9 in which molybdenum disulfide and/or tungsten disulfide is added to the resin layer in addition to the carbon particles, melting damage of resin due to electrical discharge does not occur while the insulating properties of the resin layer are maintained. On the other hand, in Comparative examples Nos. 12 and 13 in which molybdenum disulfide or tungsten disulfide is added to the resin layer but the carbon particles are not added, the resin layer does not have electrical conductivity and melting damage of resin due to electrical discharge occurs. This is because electrical discharge is not dispersed by the carbon particles and consequently melting damage of resin due to electrical discharge occurs, in the same way as Comparative example No. 11.

The invention is not limited to the examples described above and shown in the drawings. It may be varied or extended as follows. The method for roughening the surface of the bearing alloy layer is not limited to blasting processing but may also be etching, flame spraying, chemical conversion treatment or the like. The method for application of the resin surface layer is not limited to the air spray method but may also be pad printing method, screen printing method, roll coating method or the like. The sliding bearing can also be manufactured by providing the resin layer 2 on the bearing alloy layer 1 and thereafter working it into the shape of the sliding bearing. The sliding bearing of the invention may be used for applications other than for internal combustion engines, that is, not limited to a bearing alloy comprising a copper-based or aluminum-based alloy. For example, it may be used for applications such as a compressor. Furthermore, the sliding bearing of the invention may be also used under boundary lubrication and no lubrication in addition to use under fluid lubrication.

## Claims

1. A sliding bearing having a resin layer (2) coated on a surface of a bearing alloy layer (1), **characterized in that** the resin layer (2) consists of carbon particles in an amount of 10 to 40% by volume, the carbon particle having an average particle diameter of 15 to 45% of a thickness of the resin layer (2), optionally molybdenum disulfide and/or tungsten disulfide in an amount of 20 to 45% by volume, and a resin, and **in that** the resin layer (2) is electrically insulating.

2. The sliding bearing according to claim 1, **characterized in that** the resin in the resin layer (2) is polyamide-imide resin, polybenzimidazole resin or polyimide resin.

## Patentansprüche

1. Gleitlager, das eine Harzschicht (2), aufgetragen auf eine Oberfläche einer Lagerlegierungsschicht (1), hat, **dadurch gekennzeichnet, dass** die Harzschicht (2) aus Kohlenstoffpartikeln in einer Menge von 10 bis 40 Volumen-%, wobei das Kohlenstoffpartikel einen durchschnittlichen Partikeldurchmesser von 15 bis 45% der Dicke der Harzschicht (2) hat, gegebenenfalls Molybdändisulfid und/oder Wolframdisulfid in einer Menge von 20 bis 45 Volumen-% und einem Harz besteht, und dass die Harzschicht (2) elektrisch isolierend ist.

2. Gleitlelement gemäß Anspruch 1, **dadurch gekennzeichnet, dass** das Harz in der Harzschicht (2) Polyamid-imid-Harz, Polybenzimidazol-Harz oder Polyimid-Harz ist.

## Revendications

1. Un palier lisse ayant une couche de résine (2) revêtue sur une surface d'une couche d'alliage de palier (1), **caractérisé en ce que** la couche de résine (2) est composée de particules de carbone en une quantité de 10 à 40% en volume, les particules de carbone ayant un diamètre moyen de particule de 15 à 45% de l'épaisseur de la couche de résine (2), et le cas échéant, de disulfure de molybdène et/ou de disulfure de tungstène en une quantité de 20 à 45% en volume, et d'une résine, et que la couche de résine (2) est isolante électriquement.

2. Le palier lisse selon la revendication 1, **caractérisé en ce que** la résine dans la couche de résine (2) est une résine polyamide, une résine polybenzimidazole ou une résine polyimide.
